# EUROPEAN PATENT APPLICATION

(11) **EP 3 964 828 A1**
(43) Date of publication of application: **09.03.2022**
(21) Application number: 20194360.2
(22) Date of filing: 03.09.2020
(51) Int. Cl.: G01N 27/403, G01N 27/416

(54) **POTENTIOMETRIC SENSOR DEVICE**

(71) Applicant: Université de Genève, 1211 Genève (CH); Consejo Superior de Investigaciones Cientificas, 28006 Madrid (ES); Institució Catalana de Recerca I Estudis Avançats, 08010 Barcelona (ES)
(72) Inventor: Sailapu, Sunil Kumar, 530018 Andhra Pradesh (ES); Sabaté Vizcarra, Neus, 08014 BARCELONA (CH); Bakker, Eric, 1299 Crans-près-Céligny (IN)
(74) Representative: KATZAROV S.A.

(57) **Abstract**

The present invention relates to a sensor device for measuring a value comprising a reference electrode and an indicator electrode, the measure of said parameter being based on an electrical energy transferred between the sample electrode and the reference electrode, a conductor for transferring the electrical energy between the reference electrode and the sample electrode, and an ionic bridge.

The sensor device further comprises a storage module for storing the electrical energy transferred between the reference electrode and the sample electrode, and isolating means configured for isolating the storage module from the conductor, the measure of the parameter of the analyte being derived from the stored electrical energy.

The invention further relates to an apparatus based on the storage module of said sensor device, a system comprising said sensor device and a method using said sensor device.

## Description

### Technical Field

The present invention relates to a sensor device for determining a value relevant to an electrical energy associated with a parameter of an analyte. The invention further relates to an apparatus based on the storage module of said sensor device, a system comprising said sensor device and a method using said sensor device.

### Background of the art

Potentiometric sensors, also named electrochemical cell or galvanic cell, are commonly used for analyzing a composition, for instance for measuring a concentration of a component of the composition, the pH of the composition or the ion activity of a component. The set-up (or frame) of such experiment generally comprises an electrochemical cell and a high input impedance voltmeter for measurement. The cell potential measured at zero current serves as measurement signal.

The electrochemical cell is composed of two half cells, namely a sample detection cell or compartment acting for instance as a cathode and a reference solution cell acting for instance as an anode.

The sample detection compartment comprises an indicator electrode responsive to the measured component. The indicator electrode is configured to selectively respond to the ion activity of an analyte in solution or to report on the oxidation-reduction potential of the sample.

The potential of the indicator electrode is measured against that of the reference electrode of the reference solution compartment without allowing a current to flow. The electrochemical cell further comprises a salt bridge that ensures ionic contact between the two half cells.

A high input impedance voltmeter is used to read the induced potential generated by the potential difference between the indicator and reference electrode. To that end, the voltmeter is connected to monitor the voltage at open circuit (zero current).

Potentiometric sensors are chemical sensors that are increasingly being adapted and developed in implantable and wearable devices. For these applications, the state-of-the-art devices are not suitable.

The traditional manner of connection and disconnection of the high-input impedance voltmeter to the electrochemical cell in order to record the potential between the electrodes is not adapted for these new applications for numerous reasons, for example when the space available for the experiment is limited or when there is a need to limit the elements of the setup.

To overcome these issues, sensors have been alternatively equipped with on-board memory or wireless transmission modules. However, these approaches demand substantial power for the functioning of the involved auxiliary electronics. Notably, in the case of a single or a non-continuous sensing measurement, such additions make the entire system complex and dependent on external power for signal storage.

Overall, there is a need to facilitate the setup of a potentiometric sensor, notably to meet the requirements of the recently developed applications of potentiometric sensors.

### Description of the invention

The above problems are solved, at least partially, by the present invention.

The invention concerns sensor device for determining a value relevant to an electrical energy associated with a parameter of an analyte comprising
a reference electrode placed in a reference container and an indicator electrode placed in an indicator container,
a conductor for transferring said electrical energy between the reference electrode and the indicator electrode,
characterized in that the sensor device further comprises
a storage module connected to the conductor for generating a transient current flow through the conductor, said storage module being configured for storing the electrical energy transferred between the reference electrode and the indicator electrode, and
isolating means configured for isolating the storage module from the conductor so as to hold the electrical energy stored in the storage module and determine the value of said electrical energy associated with parameter of the analyte.

In the present invention, the sensor device comprises a storage module for storing the electrical energy transferred via a conductor due to a transient current flow between the electrodes. The storing module can be isolated from the conductor by isolating means to obstruct the current flow. When the storing module is isolated from the conductor, it is possible to determine a value relevant to an electrical energy stored in said storage module. The value preferably corresponds to the voltage that has been generated due to the accumulated charge across the storage module while it was connected to the electrodes via the conductor. Based on the voltage, it allows one to determine the electrical energy stored in the storage module and to deduce the parameter of said analyte.

Advantageously, the storage module of the sensor device according to the present invention allows one to store the electrical energy and upon isolation, to read or determine the level of energy stored in said storage module in a later readout step. In other words, the function of the storage module is to induce a transient current flow and store the electrical energy.

In other words, a first step is dedicated to the storage of the electrical energy in the storage module whereas the readout is performed in a later step. This allows one to simplify the setup of the experiment.

The present invention provides a readout principle that could become very useful in portable form factors and opens possibilities for potentiometric detection in point of care applications by using sensor device according to the present invention.

In an embodiment, the storage module is configured for operating free from an energy supply, preferably free from, i.e. independent of, power source external to the sensor device. In other words, it is a passive device free from energy supply to operate. Therefore, it is possible to operate the sensor device without a power source, for instance as a point of care device, to determine a parameter of an analyte, for instance the concentration of an analyte. The electrical energy is stored without involving external power sources, and isolated from the conductor, for instance the sensor circuit, for later readout. This is accomplished by placing a storage module, as portable transduction component between the indicator electrode and the reference electrode, at the point where one would ordinarily connect the high input impedance voltmeter.

Potentiometric sensors are chemical sensors that are increasingly being adapted and developed in implantable and wearable devices. For these applications, the state-of-the-art devices are not suitable notably because they are not energetically autonomous in storing an electrical response signal or because they are dependent on dedicated external power sources. In the present embodiment, these issues are solved since the storage of the electrical energy in the storage module is achieved without involving any external power-sources. This allows one to be independent of dedicated power sources.

Advantageously, the present invention has shown to deliver results by involving for instance a hand-held multimeter to read-out the value from the storage module, to be at least as accurate as those made from a high input-impedance voltmeter connected directly across a electrochemical cell in a state-of-the-art potentiometric device.

In one embodiment, the storage module is arranged for preserving a constant level of said value upon isolation. Advantageously, the stored electrical energy remains unaffected even after isolation of the storage module, for instance by disconnection of said storage module from the conductor. In other words, the storage module is shown to maintain a constant level of electrical energy or charge upon isolation, for instance for a plurality of hours, for example 24 hours, preferably at least 24 hours, more preferably between about 20 hours and about 30 hours.

In an embodiment, the storage module comprises at least a capacitor, for instance a plurality of capacitors in series or parallel configuration. A capacitor is particularly advantageous since it allows for a transient current between the electrodes only for a short time, enough to accumulate the charge and store the electrical energy corresponding to the induced voltage across the electrodes. Since the transient current in the presence of a capacitor is short-lived, the sample and reference components are not easily exhausted. This facilitates multiple measurements of the sample. Additionally, since the stored information is in the form of electrical energy, it can be either utilized or converted to other forms.

Preferably, the capacitor has a value preferably greater that 10 micro F, more preferably comprised between about 1 micro F and 220 micro F.

In one embodiment, the isolating means comprise electrical connection means for connecting the storage module with the conductor in a reversible manner so that the storage module is isolated from the conductor upon disconnection of said electrical connection means. In other words, in this embodiment the storage module is physically isolated by separating said storage module from the conductor, i.e. maintain a gap or a distance between said storage module and the conductor. This is advantageous since it allows one to preserve the response of the sensor to be read out elsewhere at a later time away from the physical location of the electrochemical cell itself.

In an embodiment, the isolating means comprise at least a switching component, for instance a diode or a plurality of diodes, said switching component having a threshold value for connecting or disconnecting the storage module to the conductor. The connection or disconnection depends on the voltage appearing across the storage element relative to said threshold value. In other words, the switching component achieves two functions: 1) It allows the energy to be stored in the storage element only if the induced voltage across the electrodes crosses a certain threshold. Thereby it allows one to detect if the sensor value crossed the threshold limit (one or more levels depending on plurality of diodes). 2) It acts as a filter to ensure that the storage module keeps the highest electrical energy value. This is advantageous since it allows one to discard the lower value from the storage volume.

In one embodiment, the isolating means comprise both electrical connection means and a switching component. This allows easy replacement/maintenance of electrical components in case of a malfunction without being in proximity of the electrochemical cell or dislodging the cell from its position.

Preferably, the isolation means, for instance the electrical connection means or the switching component does not involve external power source, in other words are independent from any external power source.

In one embodiment, the analyte is chosen among cations for instance pH, anions, biomolecules and redox species. The present invention is applicable to most any ion for which a potentiometric sensor can be developed.

In an embodiment, the parameter is chosen among concentration, ion activity, the sample pH, presence of a component, for instance a chemical or a biomolecule.

In one embodiment, the electrical energy transferred is through a self-induced current between the reference electrode acting as an anode and the indicator electrode acting as a cathode. The cathode and anode may be interchanged depending on the type of reaction.

In an embodiment, the storage module is configured for interfacing with a reader arranged for reading said value relevant to the stored electrical energy. The reader is used to determine the value of electrical energy stored in the storage module.

In one embodiment, the device comprises both indicator electrode portion and reference electrode portion in a same compartment, but preferably in this case, the reference electrode portion is non-responsive to the detected ion.

In an embodiment, the device comprises a salt bridge for ionic contact between the indicator container and the reference container.

The invention also concerns an apparatus supplied by an electrical energy, wherein the electrical energy is at least partially provided by a storage module of a sensor device according to the invention.

Advantageously, since the stored information is in the form of electrical energy, it can be either utilized or converted to other forms. For example, the said stored energy can be used to activate optical displays such as those based on redox materials and chromophores.

The invention further relates to a system for determining a value relevant to an electrical energy associated with a parameter of an analyte, the system comprising
a sensor device according to the invention, and
a reader arranged for reading a value relevant to the electrical energy stored in the storage module, the determination of said parameter being based on said value.

In an embodiment, the reader is operated by using electrical means, for instance a multimeter, acoustic means, optical means, for instance a chemical indicator, mechanical means, or a reader free from power source. The reading can be achieved either by the reader contacting the storage module, or in a non-contact or contact less approach.

A free from power source reader is for instance a reader without a battery or electrical energy supply. A reader free from power source is a reader whose only power source is the electrical energy stored in the storage module that can be connected to the reader. In other words, the reader is using the electrical energy of the storage module to determine the relevant value, for instance the voltage, corresponding to the electrical energy stored in the storage module and to thereby determine the parameter of the analyte.

As a result, the acquisition of the value of electrical energy is possible without requiring a high-input impedance instrument. In this way, a portable response carrying transduction/information storage element akin to a strip-based optical readout becomes achievable. The sensor device is achievable on a rigid substrate, or on a flexible substrate like paper, containing chemicals of the electrochemical cell preferably in solid-state, microfluidics connections, and preferably including ion-selective electrodes, printed conductive tracks, and electronic components in either discrete or printed form. The approach may lay the groundwork for a new generation of self-powered potentiometric devices that could operate in a standalone manner using the energy harvested during the sensing process. Thus, the system is autonomous or self-sufficient in electrical energy.

An example of a reader free from power source is a strip based optical readout or an electrochromic display. For instance, in an optical readout, the level of electrical energy stored in the storage module relates to the features of the colors of the strip.

The invention also relates to a method for determining a value relevant to an electrical energy associated with parameter of an analyte, the method comprising:
- Providing a system according to the present invention;
- Providing an analyte with a parameter to determine, for instance a concentration of the analyte;
- Storing the electrical energy transferred between the reference electrode and the indicator electrode in a storing module;
- Reading a value relevant to the electrical energy stored in the storage module with the reader of the system;

In one embodiment, the method further comprises:
- Determining the parameter of the analyte based on the value read in the previous step.

For instance, the value relevant to the electrical energy is a voltage that can be used to derive or compute a concentration of the analyte.

The particular advantages of the methods are similar to the ones of the sensor device of the invention and will thus not be repeated here.

The embodiments described for the sensor device also apply to the method, to the apparatus and to the system according to the present invention mutatis mutandis.

The invention can comprise an embodiment or a combination of embodiments.

### Description of the drawings

Further particular advantages and features of the invention will become more apparent from the following non-limitative description of at least one embodiment of the invention which will refer to the accompanying drawings, wherein
- Figures 1 and 2 represent a first embodiment of the present invention wherein
   - figure 1a is a schematic illustration of the physical connection/disconnection of the storage module to preserve ion-activity response for an isolated storage and later readout;
   - figure 1b) Voltage responses for K+ ion activity in artificial sweat solutions obtained by measuring the capacitor voltages with a hand-held multimeter after 24 h of its isolation from the sensor. The readings are represented as an average with standard deviation from three independent experiments. The solid line represents the linear regression fit for the average values.

   - figure 2a, b) Scheme illustrating the process of charging the capacitor based on the detected ion concentration by using either one of the configurations.
   - figure 2c) The capacitor is then disconnected from sensor and is later applied across a Prussian Blue (PB) film. The charge transfer from the capacitor produces a colour transition in the PB film, and thus identities the detected ion concentration.
   - figure 2d) Absorbance values of PB film when a charged capacitor of specific voltage is applied across its terminals. The readings are represented as an average with standard deviations from three independent experiments.
- Figure 3 represents a second embodiment of the present invention wherein
   - Figure 3a) is a scheme illustrating the circuit and the process of storing the information of the highest concentration change occurring in the sample compartment by charging the capacitor C1.
   - Figure 3b) represents a pattern of capacitor voltage (V_{c}) over a time interval due to small changes of potential (Vₑ) across the electrodes (E3, E4), which is relevant to concentration changes (Δ concentration). Here in the figure, V_{c} increases if Vₑ surpass all its previous values.

### Detailed description of the invention

The present detailed description is intended to illustrate the invention in a non-limitative manner since any feature of an embodiment may be combined with any other feature of a different embodiment in an advantageous manner.

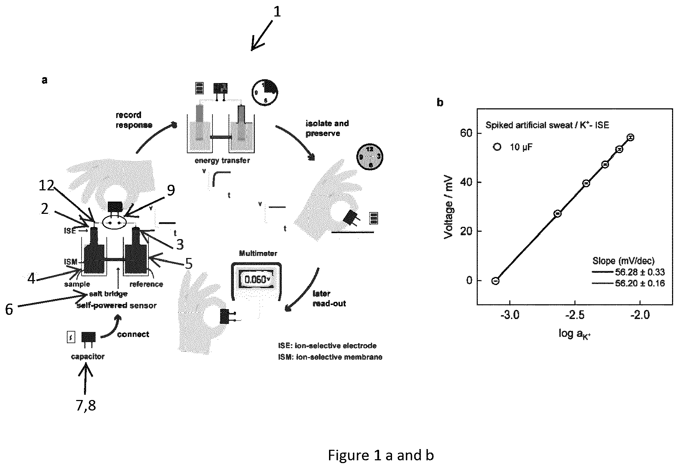

In the first and second embodiment represented in figures 1 to 3, the analyte is K⁺ ions and the parameter is the physiological concentration of K⁺ ions. The point of the first and second embodiments is the detection of physiological concentration of K⁺ ions in an artificial sweat sample as a model example of practical relevance.

The sensor device 1 is constructed with two identical electrodes ISEs, an indicator electrode 2 and a reference electrode 3, placed respectively in a indicator container 4 and a reference container 5 that are connected by a salt bridge 6. The indicator container contains a variable concentration of analyte ion while the reference container 5's composition is kept constant.

For construction of the sensor device 1, a beaker containing 50 mL of 1 mM KCI solution served as reference container 5 while another beaker comprising 50 mL of the investigated sample was chosen as indicator container 4.

The present examples illustrate that a novel self-powered measuring strategy that involves an extremely simple closed-circuit electrode setup and a storage module 7, for instance a capacitor 8 has been developed. In the present example, the storage module 7 operates free form energy supply, i.e. external energy supply. The method proposes to capture the transient current that is produced upon the building-up of a potential response in a potentiometric sensor by preserving the accumulated charge in the capacitor 8. In the present examples of the invention, this capacitor 8 assumes the role of the transduction element of the sensor to selectively detect physiological concentrations of K+ ions in a complex sweat medium. Interestingly, the response of the sensor 1 can be conserved in the capacitor 8 (storage module 7) in the form of energy many hours after its complete isolation from the sensor 1. Depending on the magnitude of capacitance value used, the capacitor 8 (storage module 7) charging time and charge storage ability can be conveniently adapted without affecting the sensor 1 response. In fact, the flexibility of the readout methodology allows a repeated readout of the same sample.

The ability to preserve the response in a portable storage module 7 with complete isolation from the sensor device 1 (i.e. the electrodes) alleviates the need for a high input impedance based complex instrumentation and makes the analysis possible using a simple hand-held multimeter as a reader. Additionally, the energy stored in the capacitor 8 could further be utilized. We anticipate that the readout strategy presented in this invention expands the scope of ion to electron transduction based self-powered sensors for point of care applications. It may form the basis to realize a potentiometric sensing device fully driven by the energy harvested during the sensing process.

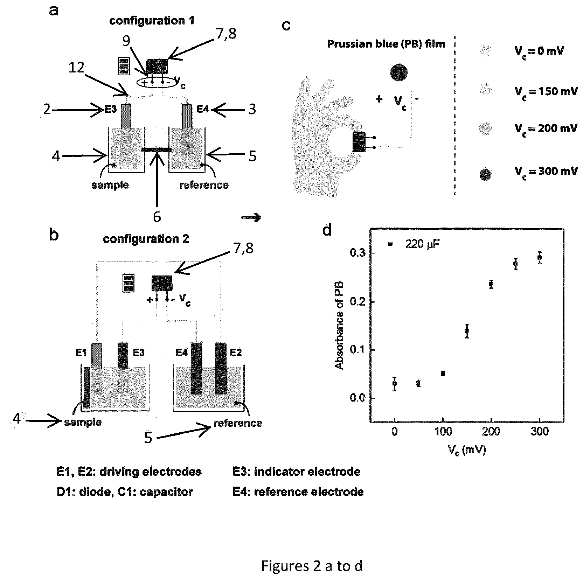

In figure 2 a to d, the sensor device 1 comprises electrical connection means 9 for connecting the capacitor 8 to the sensor device 1. The isolated capacitor voltage, that typically contains the response of the detection ion concentration is communicated (read out) in the form of an optical output signal. The charged capacitor (220 µF) is directly applied across a Prussian blue (PB) film coated on an ITO (indium tin oxide) substrate. Depending on the voltage of the capacitor 8 (storage module 7), a visual colour transition of the film from white to blue (Fig. 2c) is observed due to the charge transfer from the capacitor to the PB film. This is an example of a reader based on optical means. This colour change is very distinct and directly reflects the isolated capacitor voltage. The analysis of the absorbance values of PB film for applied capacitor voltages resembles an S-shaped curve (Fig. 2d). The absorbance values increase with increasing potential. The readout of the voltage across capacitor (i.e., response) is thereby achieved in the form of a visual colour change without involving any external electrical power sources.

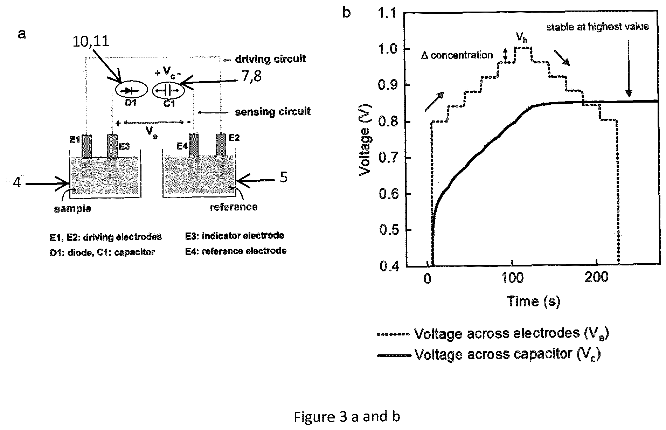

In figures 3a to b, the sensor device 1 comprises a switching component 10, namely a diode 11, for connecting the capacitor 8 to the sensor device 1, said sensor device 1 being free from salt bridge 6. The spontaneous electrochemical reactions occurring at the driving electrodes serve as the source of polarization for the sensing circuit (Fig. 3a). The indicator electrode 2 and reference electrodes 3 in separate compartments participate in transferring the charge to the capacitor C1, connected in series with a diode D1, under the influence of the driving circuit. The potential changes (Vₑ) occurring between the indicator electrode 2 and reference electrode 3 corresponds to the analyte concentration change in the sample compartment (or container) 4.

Here, diode 11 D1 significantly conducts, only when the potential across it exceeds a certain positive threshold voltage (Fig. 3b). While Vₑ increases initially, diode 11 D1 conducts (like a closed switch) and charges the capacitor 8 to a value equal to Vₑ minus the voltage drop at the diode 11. This process continues until Vₑ surpasses all its previous values. However, after the capacitor 8 gets charged, if Vₑ decreases below its highest value (Vₕ), the potential across diode falls below the threshold and stops conducting. This restricts current flow in the sensing circuit, where diode 11 acts like an open switch. As a result, despite Vₑ changing below Vₕ, the capacitor C1 stays at its highest potential. Thereby, the voltage across capacitor (V_{c}) holds the potential that is relevant to the highest detected concentration (Vₕ).

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

### REFERENCE NUMBERS

- 1: Sensor device
- 2: Indicator electrode
- 3: reference electrode
- 4: Reference container
- 5: Indicator container
- 6: Salt bridge
- 7: Storage module
- 8: Capacitor
- 9: Electrical connection means
- 10: Switching component
- 11: Diode

## Claims

1. Sensor device (1) for determining a value relevant to an electrical energy associated with a parameter of an analyte, the device (1) comprising
a reference electrode (3) placed in a reference container (4) and an indicator electrode (2) placed in an indicator container (5),
a conductor (12) for transferring said electrical energy between the reference electrode (3) and the indicator electrode (2),
**characterized in that** the sensor device (1) further comprises
a storage module (7) connected to the conductor (12) for generating a transient current flow through the conductor (12), said storage module (6) being configured for storing the electrical energy transferred between the reference electrode (3) and the indicator electrode (2), and
isolating means (9,10) configured for isolating the storage module (7) from the conductor (12) so as to hold the electrical energy stored in the storage module (7) and determine the value of said electrical energy associated with parameter of the analyte.

2. Sensor device (1) according to claim 1, wherein the storage module (7) is configured for operating free from energy supply.

3. Sensor device (1) according to claim 1 or 2, wherein the storage module (7) is arranged for preserving a constant level of said value upon isolation.

4. Sensor device (1) according to any one of claims 1 to 3, wherein the storage module (7) comprises at least a capacitor (8), for instance a plurality of capacitors in series or parallel configuration.

5. Sensor device (1) according to any one of claims 1 to 4, wherein the isolating means comprise electrical connection means (9) for connecting the storage module (7) with the conductor (12) in a reversible manner so that the sensor storage module (7) is isolated from the conductor (12) upon disconnection of said electrical connection means (9).

6. Sensor device (1) according to any one of claims 1 to 4, wherein the isolating means comprises at least a switching component (10), for instance a diode (11) or a plurality of diodes, said switching component (10) having a threshold value for connecting or disconnecting the storage module (7) to the conductor (12)..

7. Sensor device (1) according to any one of claims 1 to 6, wherein the device (1) further comprises a salt bridge (6) for ensuring ionic contact between the indicator container (5) and the reference container (4).

8. Sensor device (1) according to any one of claims 1 to 7, wherein the parameter is chosen among concentration, the pH, ion activity.

9. Sensor device (1) according to any one of claims 1 to 8, wherein the electrical energy transferred is a self-induced current between the reference electrode (3) acting as an anode and the indicator electrode (2) acting as a cathode..

10. Sensor device (1) according to any one of claims 1 to 9, wherein the storage module (7) is configured for interfacing with a reader arranged for reading said value relevant to the stored electrical energy.

11. Apparatus supplied by an electrical energy, wherein the electrical energy is at least partially provided by a storage module (7) of a sensor device (1) according to any one of claims 1 to 10.

12. System for determining a value relevant to an electrical energy associated with a parameter of an analyte, the system comprising
a sensor device (1) according to any one of claims 1 to 11, and
a reader arranged for reading a value relevant to the electrical energy stored in the storage module (7), the determination of said parameter being based on said value.

13. System according to claim 12, wherein the reader is operated by using electrical means for instance a multimeter, acoustic means, optical means, for instance a chemical indicator, or mechanical means or a reader free from power source.

14. Method for determining a value relevant to an electrical energy associated with a parameter of an analyte, the method comprising:
- Providing a system according to any one of claims 12 to 13;
- Providing an analyte with a parameter to determine, for instance a concentration of the analyte;
- Storing the electrical energy transferred between the reference electrode (3) and the indicator electrode (2) in a storing module (7);
- Reading a value relevant to the electrical energy stored in the storage module (7) with the reader of the system;

15. Method according to claim 14, wherein the method further comprises:
- Determining the parameter of the analyte based on the value read in the previous step.
